# EUROPEAN PATENT APPLICATION

(11) **EP 4 645 288 A1**
(43) Date of publication of application: **05.11.2025**
(21) Application number: 23957103.7
(22) Date of filing: 31.10.2023
(51) Int. Cl.: G09F 9/30

(54) **DISPLAY APPARATUS AND WEARABLE DEVICE**

(71) Applicant: Boe Technology Group Co., Ltd., Beijing 100015 (CN)
(72) Inventor: SHEN, Youqing, Beijing 100176 (CN); ZHU, Hong, Beijing 100176 (CN); LEI, Yue, Beijing 100176 (CN); LIU, Xiaolin, Beijing 100176 (CN)
(74) Representative: Haseltine Lake Kempner LLP
(86) International application number: PCT/CN2023/128385
(87) International publication number: WO 2025/091225

(57) **Abstract**

The present application belongs to the technical field of display. Disclosed are a display apparatus and a wearable device. The display apparatus comprises a main body support assembly, rotating support assemblies and a flexible display panel. When the display apparatus is switched between an unfolded state and a folded state, the rotating support assemblies distributed on two sides of the main body support assembly rotate relatively in different directions under the action of external force. At this point, the flexible display panel can be folded or unfolded about the second direction. In addition, during switching of the display apparatus between the unfolded state and the folded state, the first support portion rotates a certain angle relative to the main body support assembly, and the second support portion also rotates a certain angle relative to the first support portion. At this point, the flexible display panel is driven by the first support portion and the second support portion to fold in different forms. In this way, the display apparatus has various folded forms, which makes the display apparatus more flexible to use, thereby improving the user experience. In this case, the flexible display panel is folded into different patterns under the drive of the first support portion and the second support portion. In this way, the display apparatus supports various different folding patterns, which improves the flexibility in use of the display apparatus, and improves user experience.

## Description

### TECHNICAL FIELD

The present disclosure relates to the field of display technologies, and in particular, relates to a display apparatus and a wearable device.

### BACKGROUND

With the development of display technology, more and more display apparatuses (for example, smart watches) are equipped with a foldable display screen. A display apparatus having a foldable display screen can realize switching of the physical size of the display apparatus, which greatly improves user experience.

However, the current display apparatus equipped with a foldable display screen supports a single folding pattern, resulting in poor flexibility in the use of the display apparatus.

### SUMMARY

Embodiments of the present disclosure provide a display apparatus and a wearable device, which can solve the problem that the display apparatus equipped with a foldable display screen supports a relatively single folding pattern in the related art. The technical solutions are as follows.

In one aspect, a display apparatus is provided. The display apparatus includes:
a body support assembly;
two rotatable support assemblies disposed on two sides of the body support assembly in a first direction, wherein the rotatable support assembly includes a first support portion and a second support portion, wherein the first support portion is disposed between the body support assembly and the second support portion in the first direction, and the first support portion is rotatably connected to the second support portion and the body support assembly; and
a flexible display panel, wherein a rear surface of the flexible display panel is connected to the body support assembly and the rotatable support assemblies,
wherein in a process of the display apparatus switching between an unfolded state and a folded state, an angle of the first support portion rotating relative to the body support assembly and an angle of the second support portion rotating relative to the first support portion are both acute angles.

In some embodiments, a first slide member and a second slide member are arranged on the first support portion at two opposite sides of the first direction, a third slide member rotatably connected to the first slide member is arranged on a side, facing towards the first support portion, of the body support assembly, and a fourth slide member rotatably connected to the second slide member is arranged on a side, facing towards the first support portion, of the second support portion.

In some embodiments, one of the first slide member and the third slide member is a first arc-shaped slide plate, and the other of the first slide member and the third slide member is a first arc-shaped chute; and one of the second slide member and the fourth slide member is a second arc-shaped slide plate, and the other of the second slide member and the fourth slide member is a second arc-shaped chute,
wherein at least a part of the first arc-shaped slide plate is disposed in the first arc-shaped chute and at least a part of the second arc-shaped slide plate is disposed in the second arc-shaped chute.

In some embodiments, a chute opening allowing a corresponding arc-shaped slide plate to slide into and a limit blind end opposite to the chute opening are arranged in each of the first arc-shaped chute and the second arc-shaped chute,
wherein in the case that the display apparatus is in the folded state, an end portion of the first arc-shaped slide plate is abutted against the limit blind end of the first arc-shaped chute, and/or an end portion of the second arc-shaped slide plate is abutted against the limit blind end of the second arc-shaped chute.

In some embodiments, a first rotation limit member and a second rotation limit member are arranged on the first support portion at two opposite sides of the first direction, a third rotation limit member matched with the first rotation limit member is arranged on a side, facing towards the first support portion, of the body support assembly, and a fourth rotation limit member matched with the second rotation limit member is arranged on a side, facing towards the first support portion, of the second support portion,
wherein after the display apparatus is in the unfolded state, the first rotation limit member is abutted against the third rotation limit member, and/or the second rotation limit member is abutted against the fourth rotation limit member.

In some embodiments, in the case that the first slide member is the first arc-shaped slide plate and the third slide member is the first arc-shaped chute, the first rotation limit member includes a first limit protrusion fixedly connected to an end portion of the first arc-shaped slide plate, and the third rotation limit member includes a second limit protrusion fixed to an inner wall of the first arc-shaped chute;
and/or, in the case that the second slide member is the second arc-shaped slide plate and the fourth slide member is the second arc-shaped chute, the second rotation limit member includes a third limit protrusion fixedly connected to an end portion of the second arc-shaped slide plate, and the fourth rotation limit member includes a fourth limit protrusion fixed to an inner wall of the second arc-shaped chute.

In some embodiments, one of the first rotation limit member and the third rotation limit member is a first limit column, the other of the first rotation limit member and the third rotation limit member is a third arc-shaped chute, and at least a part of the first limit column is disposed in the third arc-shaped chute;
and/or, one of the second rotation limit member and the fourth rotation limit member is a second limit column, the other of the second rotation limit member and the fourth rotation limit member is a fourth arc-shaped chute, and at least a part of the second limit column is disposed in the fourth arc-shaped chute,
wherein in the case that the display apparatus is in the unfolded state, the first limit column is abutted against a first end of the third arc-shaped chute, and/or the second limit column is abutted against a first end of the fourth arc-shaped chute; and in the case that the display apparatus is in the folded state, the first limit column is abutted against a second end of the third arc-shaped chute, and/or the second limit column is abutted against a second end of the fourth arc-shaped chute.

In some embodiments, the body support assembly includes a support base and a first connection plate fixedly connected to a side surface of the support base, wherein the first limit column is fixedly connected to a side, facing away from the support base, of the first connection plate;
the first support portion includes a first support portion body and a second connection plate connected to a side surface of the first support portion body, wherein the third arc-shaped chute and the fourth arc-shaped chute are disposed on two opposite sides of the second connection plate in the first direction; and
the second support portion includes a second support portion body and a third connection plate connected to a side surface of the second support portion body, wherein the second limit column is fixedly connected to a side, facing away from the second support portion body, of the third connection plate,
wherein a side, close to the first support portion body, of the support base is provided with the third slide member; a side of, close to the support base, the first support portion body is provided with the first slide member; a side, close to the second support portion body, of the first support portion body is provided with the second slide member; and a side, close to the first support portion body, of the second support portion body is provided with the fourth slide member.

In some embodiments, the second connection plate includes an intermediate connection plate, and a first edge connection plate and a second edge connection plate fixedly connected to two opposite sides of the intermediate connection plate, wherein the intermediate connection plate is arranged oppositely to the first support portion body and is connected to the first support portion body, the first edge connection plate is disposed on a side, facing away from the support base, of the first connection plate, and the second edge connection plate is disposed on a side, facing away from the second support portion body, of the third connection plate,
wherein the third arc-shaped chute is disposed on the first edge connection plate, and the fourth arc-shaped chute is disposed on the second edge connection plate.

In some embodiments, the display apparatus further includes a first torsion assembly connected to a side, facing away from the support base, of the first connection plate and a side, facing towards the body support assembly, of the first edge connection plate, wherein the first torsion assembly is configured to provide a damping force in a case that the first support portion rotates relative to the body support assembly;
and/or, a second torsion assembly connected to a side, facing away from the second support portion body, of the third connection plate and a side, facing towards the second support portion, of the second edge connection plate, wherein the second torsion assembly is configured to provide a damping force in a case that the second support portion rotates relative to the first support portion.

In some embodiments, the first torsion assembly includes a first torsion protrusion fixedly connected to a side, facing away from the support base, of the first connection plate and at least one second torsion protrusion fixedly connected to a side, facing towards the body support assembly, of the first edge connection plate; and in the process of the display apparatus switching between the unfolded state and the folded state, one second torsion protrusion of the at least one second torsion protrusion is always abutted against the first torsion protrusion, and the first torsion protrusion is movable relative to the second torsion protrusion in the first direction;
and/or, the second torsion assembly includes: a third torsion protrusion fixedly connected to a side, facing away from the second support portion body, of the third connection plate, and at least one fourth torsion protrusion fixedly connected to a side, facing towards the second support portion, of the second edge connection plate; and in the process of the display apparatus switching between the unfolded state and the folded state, one fourth torsion protrusion of the at least one fourth torsion protrusion is always abutted against the third torsion protrusion, and the third torsion protrusion is movable relative to the fourth torsion protrusion in the first direction.

In some embodiments, the first torsion protrusion is provided with a first slope and a second slope opposite to each other in the first direction, and the second torsion protrusion is provided with a third slope and a fourth slope opposite to each other in the first direction; and in the process of the display apparatus switching between the unfolded state and the folded state, the first torsion protrusion first is abutted against the second torsion protrusion by attaching the first slope with the third slope, and then is abutted against the second torsion protrusion by attaching the second slope with the fourth slope;
and/or, the third torsion protrusion is provided with a fifth slope and a sixth slope opposite to each other in the first direction, and the fourth torsion protrusion is provided with a seventh slope and an eighth slope opposite to each other in the first direction; and in the process of the display apparatus switching between the unfolded state and the folded state, the third torsion protrusion first is abutted against the fourth torsion protrusion by attaching the fifth slope with the seventh slope, and then is abutted against the fourth torsion protrusion by attaching the sixth slope with the eighth slope.

In some embodiments, a first mounting groove is arranged in a side, facing away from the flexible display panel, of the body support assembly, and the first torsion assembly further includes a first elastic element disposed in the first mounting groove, wherein a part of the first torsion protrusion is disposed in the first mounting groove, another part extends out of the first mounting groove, one end of the first elastic element is fixedly connected to a bottom surface of the first mounting groove, and another end of the first elastic element is fixedly connected to the part of the first torsion protrusion in the first mounting groove;
and/or, a second mounting groove is arranged in a side, facing away from the flexible display panel, of the second support portion, and the second torsion assembly further includes a second elastic element disposed in the second mounting groove, wherein a part of the third torsion protrusion is disposed in the second mounting groove, another part extends out of the second mounting groove, one end of the second elastic element is fixedly connected to a bottom surface of the second mounting groove, and another end of the second elastic element is fixedly connected to the part of the third torsion protrusion in the second mounting groove.

In some embodiments, the first torsion assembly further includes first foam fixed to an inner side wall of the first arc-shaped chute; and/or, the second torsion assembly further includes second foam fixed to an inner side wall of the second arc-shaped chute.

In some embodiments, the display apparatus further includes: a fixing rod and a third elastic element, wherein a first end of the fixing rod is fixedly connected to a side surface of the first support portion body, the intermediate connection plate is sleeved on the fixing rod and is slidably connected to the fixing rod, and the third elastic element is disposed between the intermediate connection plate and a second end of the fixing rod.

In some embodiments, the flexible display panel includes a driver backplane, a planarization layer disposed on a side of the driver backplane, and a plurality of light-emitting devices disposed on a side, facing away from the driver backplane, of the planarization layer, wherein the plurality of light-emitting devices are all electrically connected to the driver backplane,
wherein a rotation axis of the first support portion under the condition of rotating relative to the body support assembly is disposed in a surface, facing away from the driver backplane, of the planarization layer, and a rotation axis of the second support portion under the condition of rotating relative to the first support portion is disposed in the surface, facing away from the driver backplane, of the planarization layer.

In some embodiments, the display apparatus further includes a housing, wherein the housing includes a first rigid housing connected to the body support assembly, a flexible housing connected to the first support portion, and a second rigid housing connected to the second support portion,
wherein the flexible housing is disposed between the first rigid housing and the second rigid housing, and the flexible housing is connected to the first rigid housing and the second rigid housing.

In some embodiments, the housing includes a cladding member, a middle bezel, and a bottom plate disposed in a direction perpendicular to a display surface of the flexible display panel, wherein
the middle bezel is connected to the body support assembly and the two rotatable support assemblies, the bottom plate is connected to a side, facing away from the flexible display panel, of the middle bezel, the cladding member is disposed on a side, facing away from the middle bezel, of the flexible display panel, and the cladding member covers a non-display region of the flexible display panel.

In some embodiments, an opening hole is arranged in a side, facing away from the flexible display panel, of the bottom plate, and the display apparatus further includes a physical sign detection module disposed in the housing, wherein at least a part of the physical sign detection module is exposed through the opening hole.

In another aspect, a wearable device is provided. The wearable device includes:
a display apparatus and a watchband detachably connected to the display apparatus, wherein the display apparatus is the display apparatus according to any one of the above.

The technical solutions according to the embodiments of the present disclosure at least achieve the following beneficial effects:

Provided is a display apparatus including a body support assembly, two rotatable support assemblies, and a flexible display panel. By arranging the body support assembly and the two rotatable support assemblies disposed on two sides of the body support assembly in the first direction in the display apparatus, in the case that the display apparatus switches between the unfolded state and the folded state, the rotatable support assemblies on two sides of the body support assembly are rotatable relatively in different directions under the action of external force. In this case, the flexible display panel in the display apparatus is foldable in a second direction (the second direction can be perpendicular to the first direction) under the drive of the rotatable support assemblies. In addition, in the process of the display apparatus switching between the unfolded state and the folded state, the first support portion of one rotatable support assembly is rotatable at a certain angle relative to the body support assembly, and the second support portion is also rotatable at a certain angle relative to the first support portion. In this case, the flexible display panel can be folded into different patterns under the drive of the first support portion and the second support portion. In this way, the display apparatus provided with the flexible display panel in the present disclosure supports various different folding patterns, which improves the flexibility in the use of the display apparatus, and improves user experience.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of a display apparatus according to some embodiments of the present disclosure;
FIG. 2 is a schematic exploded view of a partial structure of the display apparatus shown in FIG. 1;
FIG. 3 is a schematic partial structural diagram of the display apparatus shown in FIG. 2;
FIG. 4 is a schematic exploded view of a first support portion in a rotatable support assembly and a body support assembly according to some embodiments of the present disclosure;
FIG. 5 is a schematic diagram of connection between a body support assembly, a first support portion, and a second support portion according to some embodiments of the present disclosure;
FIG. 6 is a schematic diagram of connection between the body support assembly and the rotatable support assembly in the case that the display apparatus is in a folded state according to some embodiments of the present disclosure;
FIG. 7 is another schematic diagram of connection between a rotatable support assembly, a first support portion, and a second support portion according to some embodiments of the present disclosure;
FIG. 8 is a schematic exploded view of a partial structure of a display apparatus according to some embodiments of the present disclosure;
FIG. 9 is a schematic diagram of a folding effect of the display apparatus shown in FIG. 8;
FIG. 10 is a schematic assembly diagram of the display apparatus shown in FIG. 8;
FIG. 11 is a schematic partial structural diagram of still another display apparatus according to some embodiments of the present disclosure;
FIG. 12 is a schematic partial structural diagram of yet still another display apparatus according to some embodiments of the present disclosure;
FIG. 13 is a top view of a partial structure of a display apparatus according to some embodiments of the present disclosure;
FIG. 14 is a schematic diagram of a separation effect of a first torsion protrusion and a second torsion protrusion according to some embodiments of the present disclosure;
FIG. 15 is a schematic diagram of connection between a first torsion protrusion and a plurality of second torsion protrusions in the case that the display apparatus is in a flattened state according to some embodiments of the present disclosure;
FIG. 16 is a schematic diagram of connection between a first torsion protrusion and a plurality of second torsion protrusions in the case that the display apparatus is in a folded state according to some embodiments of the present disclosure;
FIG. 17 is a top view of a partial structure of another display apparatus according to some embodiments of the present disclosure;
FIG. 18 is a schematic partial structural diagram of a display apparatus according to another embodiment of the present disclosure;
FIG. 19 is a schematic side view of a display apparatus with a flexible display panel unfolded according to some embodiments of the present disclosure;
FIG. 20 is a schematic structural diagram of film layers of a flexible display panel according to some embodiments of the present disclosure;
FIG. 21 is a schematic exploded view of a display apparatus according to some embodiments of the present disclosure;
FIG. 22 is a schematic exploded view of a housing in FIG. 21;
FIG. 23 is a schematic structural diagram of a wearable device according to some embodiments of the present disclosure;
FIG. 24 is a schematic partial structural diagram of a wearable device according to some embodiments of the present disclosure; and
FIG. 25 is a schematic diagram of connection between the watchband in FIG. 24 and the display apparatus.

The above drawings have shown the explicit embodiments of the present disclosure, which will be described below in detail. These drawings and text descriptions are not intended to limit the scope of the conception of the present disclosure in any way, but to illustrate the concept of the present disclosure to those skilled in the art with reference to specific embodiments.

### DETAILED DESCRIPTION

For clearer descriptions of the objectives, technical solutions, and advantages of the present disclosure, embodiments of the present disclosure are further described in detail below with reference to the accompanying drawings.

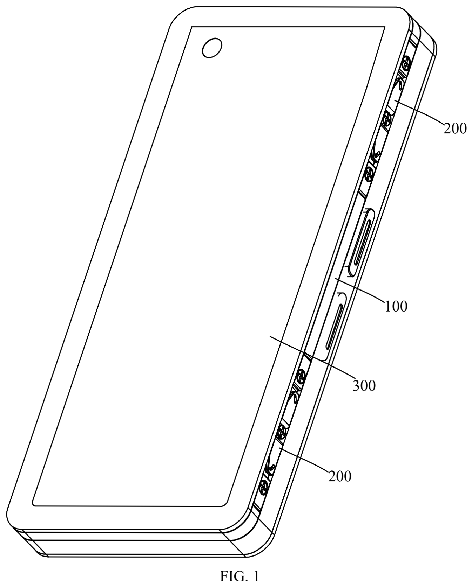

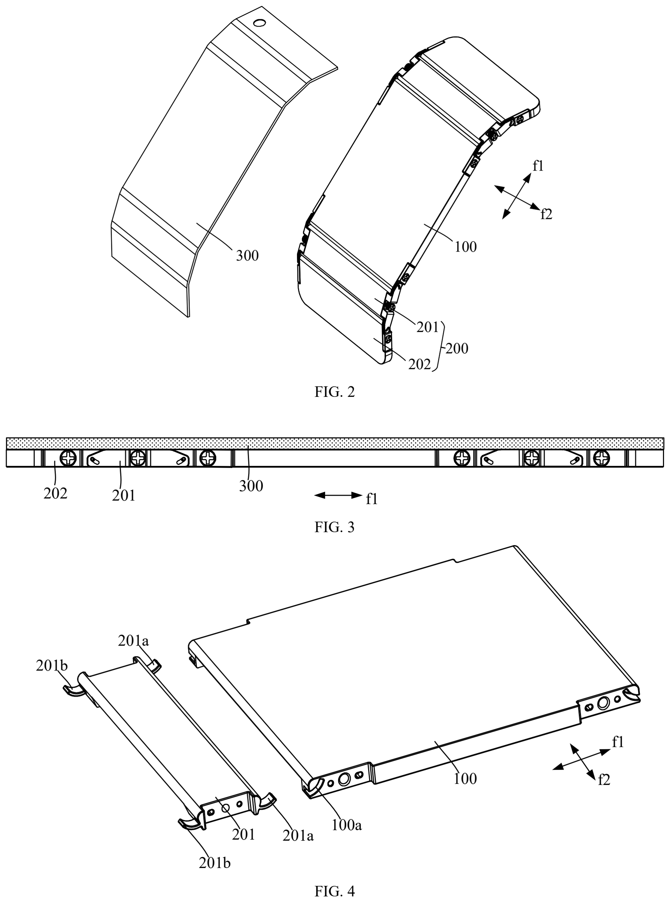

Referring to FIG. 1, FIG. 2, and FIG. 3, FIG. 1 is a schematic structural diagram of a display apparatus according to some embodiments of the present disclosure, FIG. 2 is a schematic exploded view of a partial structure of the display apparatus shown in FIG. 1, and FIG. 3 is a schematic partial structural diagram of the display apparatus shown in FIG. 2. The display apparatus is any product with a display function, such as a mobile phone, a tablet computer, a television, a display, a notebook computer, a digital photo frame, and a navigator, or a device body in a wearable device. The display apparatus includes a body support assembly 100, two rotatable support assemblies 200, and a flexible display panel 300.

The two rotatable support assemblies 200 in the display apparatus are disposed on two sides of the body support assembly 100 in a first direction f1. The rotatable support assembly 200 includes a first support portion 201 and a second support portion 202, wherein the first support portion 201 is disposed between the body support assembly 100 and the second support portion 202 in the first direction f1, and the first support portion 201 is rotatably connected to the second support portion 202 and the body support assembly 100, respectively. It should be noted that, in other possible implementations, the rotatable support assembly 200 further includes: at least one auxiliary support portion (not shown in the figures) on a side, facing away from the first support portion 201, of the second support portion 202, and the auxiliary support portion is rotatably connected to the second support portion. In the case that a plurality of auxiliary support portions are provided, the plurality of auxiliary support portions are rotatably connected to one another.

A rear surface of the flexible display panel 300 in the display apparatus is connected to the body support assembly 100 and the rotatable support assemblies 200, respectively. It should be noted that, the rear surface of the flexible display panel is a surface opposite to a display surface of the flexible display panel.

In a process of the display apparatus switching between an unfolded state and a folded state, an angle of the first support portion 201 rotating relative to the body support assembly 100 and an angle of the second support portion 202 rotating relative to the first support portion 201 are both acute angles.

In the embodiments of the present disclosure, with the body support assembly 100 arranged in the display apparatus and the two rotatable support assemblies 200 disposed on two sides of the body support assembly 100 in the first direction f1, in the case that the display apparatus switches between the unfolded state and the folded state, the rotatable support assemblies 200 on two sides of the body support assembly 100 are rotatable relatively in different directions under the action of external force. In this case, the flexible display panel 300 in the display apparatus is foldable in a second direction (the second direction is perpendicular to the first direction) under the drive of the rotatable support assemblies 200. In addition, in the process of the display apparatus switching between the unfolded state and the folded state, the first support portion 201 in one rotatable support assembly 200 is rotatable at a certain angle relative to the body support assembly 100, and the second support portion 202 is also rotatable at a certain angle relative to the first support portion 201. In this case, the flexible display panel 300 can be folded into different patterns under the drive of the first support portion 201 and the second support portion 202. In this way, the display apparatus equipped with the flexible display panel 300 in the present disclosure supports various different folding patterns, which improves the flexibility in the use of the display apparatus, and improves user experience.

Exemplarily, in the case that the display apparatus is in the unfolded state, a side, facing towards the flexible display panel 300, of the body support assembly 100 is flush with a side, facing towards the flexible display panel 300, of the rotatable support assembly 200. In the case that the display apparatus switches from the unfolded state to the folded state, a direction in which the first support portion 201 in one rotatable support assembly 200 is rotated relative to the body support assembly 100 is the same as a direction in which the second support portion 202 is rotated relative to the first support portion 201. It should be noted that, the basic structural composition and the movement principle of the rotatable support assemblies 200 on the two opposite sides of the body support assembly 100 are the same, and reference is made to the above description of the rotatable support assemblies. Details are not repeated herein again.

In summary, the embodiments of the present disclosure provide a display apparatus including a body support assembly, two rotatable support assemblies, and a flexible display panel. By arranging the body support assembly and the two rotatable support assemblies disposed on two sides of the body support assembly in the first direction in the display apparatus, in the case that the display apparatus switches between the unfolded state and the folded state, the rotatable support assemblies on two sides of the body support assembly are rotatable relatively in different directions under the action of external force. In this case, the flexible display panel in the display apparatus is foldable in a second direction (the second direction is perpendicular to the first direction) under the drive of the rotatable support assemblies. In addition, in the process of the display apparatus switching between the unfolded state and the folded state, the first support portion of one rotatable support assembly is rotatable at a certain angle relative to the body support assembly, and the second support portion is also rotatable at a certain angle relative to the first support portion. In this case, the flexible display panel can be folded into different patterns under the drive of the first support portion and the second support portion. In this way, the display apparatus provided with the flexible display panel in the present disclosure supports various different folding patterns, which improves the flexibility in the use of the display apparatus, and improves user experience.

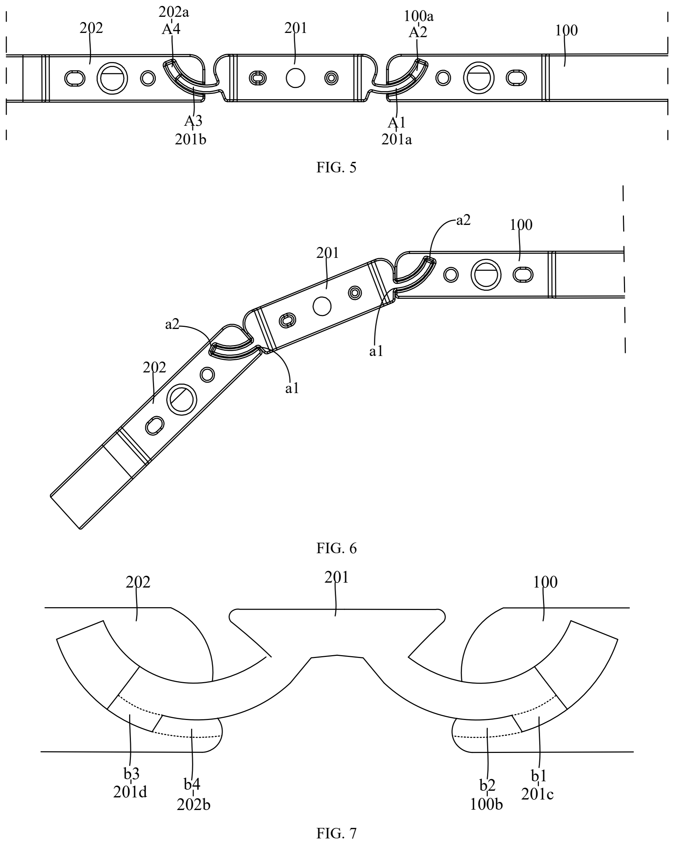

In some embodiments, referring to FIG. 4 and FIG. 5, FIG. 4 is a schematic exploded view of a first support portion in a rotatable support assembly and a body support assembly according to some embodiments of the present disclosure, and FIG. 5 is a schematic diagram of connection between a body support assembly, a first support portion, and a second support portion according to some embodiments of the present disclosure. A first slide member 201a and a second slide member 201b are arranged on the first support portion 201 in the rotatable support assembly 200 at two opposite sides of the first direction f1. A third slide member 100a rotatably connected to the first slide member 201a is arranged on a side, facing towards the first support portion 201, of the body support assembly 100, and a fourth slide member 202a rotatably connected to the second slide member 201b is arranged on a side, facing towards the first support portion 201, of the second support portion 202. In this case, the first slide member 201a and the second slide member 201b are arranged on two opposite sides of the first support portion 201, respectively, the third slide member 100a is arranged on the side, facing towards the first support portion 201, of the body support assembly 100, and the fourth slide member 202a is arranged on the side, facing towards the first support portion 201, of the second support portion 202. In this way, the relative rotation between the first support portion 201 and the body support assembly 100 can be achieved by the cooperation of the first slide member 201a with the third slide member 100a, and the relative rotation between the second support portion 201 and the first support portion 201 can be achieved by the cooperation of the second slide member 201b with the fourth slide member 202a. In the present disclosure, in a second direction f2, the side, facing towards the body support assembly 100, of the first support portion 201 is provided with two first slide members 201a, and the side, facing towards the second support portion 202, of the first support portion 201 is provided with two second slide members 201b. In the second direction f2, the side, facing towards the first support portion 201, of the body support assembly 100 is provided with two third slide members 100a, and the side, facing towards the first support portion 201, of the second support portion 202 is provided with two fourth slide members 202a. In this way, the rotational stability of the first support portion 201 relative to the body support assembly 100 and the rotational stability of the second support portion 202 relative to the first support portion 201 are further improved.

In the embodiments of the present disclosure, as shown in FIG. 5, one of the first slide member 201a on the first support portion 201 and the third slide member 100a on the body support assembly 100 is a first arc-shaped slide plate A1, and the other is a first arc-shaped chute A2. One of the second slide member 201b on the first support portion 201 and the fourth slide member 202a on the second support portion 202 is a second arc-shaped slide plate A3, and the other is a second arc-shaped chute A4. At least a part of the first arc-shaped slide plate A1 is disposed in the first arc-shaped chute A2, and at least a part of the second arc-shaped slide plate A3 is disposed in the second arc-shaped chute A4. In this case, the rotation of the first support portion 201 relative to the body support assembly 100 and the rotation of the second support portion 202 relative to the first support portion 201 can be conveniently achieved by the cooperation of the arc-shaped slide plates and the arc-shaped chutes. It should be noted that, in the embodiments of the present disclosure, the first slide member 201a being the first arc-shaped slide plate A1, the third slide member 100a being the first arc-shaped chute A2, the second slide member 201b being the second arc-shaped slide plate A3, and the fourth slide member 202a being the second arc-shaped chute A4 are used as examples for schematic illustration.

In some embodiments, referring to FIG. 5 and FIG. 6, FIG. 6 is a schematic diagram of connection between the body support assembly and the rotatable support assembly in the case that the display apparatus is in a folded state according to some embodiments of the present disclosure. A chute opening a1 allowing the corresponding arc-shaped slide plate to slide into and a limit blind end a2 opposite to the chute opening a1 are arranged in each on the first arc-shaped chute A2 and the second arc-shaped chute A4. In the case that the display apparatus is in the folded state, an end portion of the first arc-shaped slide plate A1 is abutted against the limit blind end a2 of the first arc-shaped chute A2, and/or an end portion of the second arc-shaped slide plate A3 is abutted against the limit blind end a2 of the second arc-shaped chute A4. Exemplarily, the first support portion 201 rotating relative to the body support assembly 100 is used as an example for schematic illustration: in a process of the display apparatus switching from the unfolded state to the folded state, the first arc-shaped slide plate A1 on the first support portion 201 is slidable in the first arc-shaped chute A2 toward the direction close to the limit blind end a2 of the first arc-shaped chute A2, and in the case that the first support portion 201 rotates to a target angle, the end portion of the first arc-shaped slide plate A1 is abutted against the limit blind end a2 of the first arc-shaped chute A2. In this way, excessive rotation of the first support portion 201 can be avoided, and a side, facing towards the flexible display panel 300, of the limit blind end a2 of the first arc-shaped chute A2 can effectively support the flexible display panel 300.

In the embodiments of the present disclosure, referring to FIG. 7, FIG. 7 is a schematic diagram of connection between another rotatable support assembly, a first support portion, and a second support portion according to some embodiments of the present disclosure. A first rotation limit member 201c and a second rotation limit member 201d are further arranged on the first support portion 201 in the rotatable support assembly 200 at two opposite sides of the first direction f1. A third rotation limit member 100b matched with the first rotation limit member 201c is further arranged on a side, facing towards the first support portion 201, of the body support assembly 100, and a fourth rotation limit member 202b matched with the second rotation limit member 201d is further arranged on a side, facing towards the first support portion 201, of the second support portion 202. In the case that the display apparatus is in the unfolded state, the first rotation limit member 201c is abutted against the third rotation limit member 100b, and/or the second rotation limit member 201d is abutted against the fourth rotation limit member 202b. Exemplarily, in the case that the display apparatus is in the unfolded state, a side, facing towards the flexible display panel 300, of the body support assembly 100 is flush with a side, facing towards the flexible display panel 300, of the rotatable support assembly 200 in the display apparatus, to enable the flexible display panel 300 to be in a flattened state. The first support portion 201 and the body support assembly 100 can achieve limiting in the flattened state through the abutting of the first rotation limit member 201c and the third rotation limit member 100 b; and the second support portion 202 and the first support portion 201 can achieve limiting in the flattened state through the abutting of the second rotation limit member 201d and the fourth rotation limit member 202b. In this way, the bad phenomenon of reverse folding of the display apparatus can be effectively avoided, and the reliability in the use of the display apparatus is ensured.

Various optional implementations are provided for the structural forms of the first rotation limit member and the third rotation limit member, and the structural forms of the second rotation limit member and the fourth rotation limit member in the present disclosure. The following two optional implementations are used as examples in the following embodiments of the present disclosure for schematic illustration.

In a first optional implementation, as shown in FIG. 7, in the case that the first slide member 201a is the first arc-shaped slide plate A1 and the third slide member 100a is the first arc-shaped chute A2, the first rotation limit member 201c includes: a first limit protrusion b1 fixedly connected to an end portion of the first arc-shaped slide plate A1, and the third rotation limit member 100b includes: a second limit protrusion b2 fixed to an inner wall of the first arc-shaped chute A2. And/or, in the case that the second slide member 201b is the second arc-shaped slide plate A3 and the fourth slide member 202a is the second arc-shaped chute A4, the second rotation limit member 201d includes: a third limit protrusion b3 fixedly connected to an end portion of the second arc-shaped slide plate A3, and the fourth rotation limit member 202b includes: a fourth limit protrusion b4 fixed to an inner wall of the second arc-shaped chute A4. Exemplarily, the slide connection between the second slide member 201b and the fourth slide member 202a is used as an example for schematic illustration: in the process of the display apparatus switching from the folded state to the unfolded state, the second arc-shaped slide plate A3 drives the third limit protrusion b3 to move towards the direction close to the fourth limit protrusion b4 in the second arc-shaped chute A4; and in the case that the display apparatus rotates to be in the flattened state, a surface of the third limit protrusion b3 is abutted against a surface of the fourth limit protrusion b4, so as to achieve the limiting in the flattened state. It should be noted that, for the principle of limiting the first slide member 201a and the third slide member 100a by the first limit protrusion b1 and the second limit protrusion b2, reference may be made to the above principle of limiting the second slide member 201b and the fourth slide member 202a. Details are not repeated herein again.

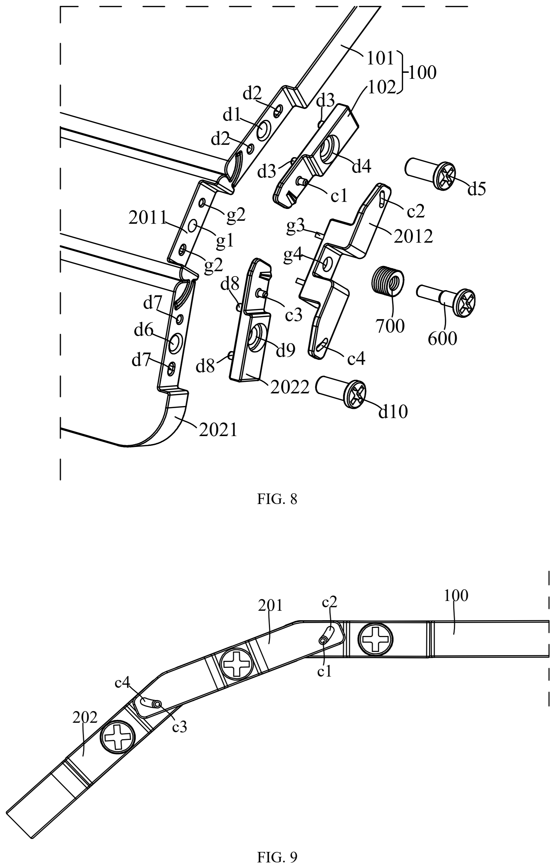

In a second optional implementation, referring to FIG. 8 and FIG. 9, FIG. 8 is a schematic exploded view of a partial structure of a display apparatus according to some embodiments of the present disclosure, and FIG. 9 is a schematic diagram of a folding effect of the display apparatus shown in FIG. 8. One of the first rotation limit member 201c and the third rotation limit member 100b is a first limit column c1, the other is a third arc-shaped chute c2, and at least a part of the first limit column c1 is disposed in the third arc-shaped chute c2. And/or, one of the second rotation limit member 201d and the fourth rotation limit member 202b is a second limit column c3, the other is a fourth arc-shaped chute c4, and at least a part of the second limit column c3 is disposed in the fourth arc-shaped chute c4. In the case that the display apparatus is in the unfolded state, the first limit column c1 is abutted against a first end of the third arc-shaped chute c2, and/or the second limit column c3 is abutted against a first end of the fourth arc-shaped chute c4. In the case that the display apparatus is in the folded state, the first limit column c1 is abutted against a second end of the third arc-shaped chute c2, and/or the second limit column c3 is abutted against a second end of the fourth arc-shaped chute c4. It should be noted that, in the following embodiments, the third rotation limit member 100b being the first limit column c1, the first rotation limit member 201c being the third arc-shaped chute c2, the second rotation limit member 201d being the fourth arc-shaped chute c4, and the fourth rotation limit member 202b being a second limit column c3 are used as examples for schematic illustration.

Exemplarily, the process of the first support portion 201 rotating relative to the body support assembly 100 is used as an example for schematic illustration: in the process of the display apparatus switching from the folded state to the unfolded state, the first end of the third arc-shaped chute c2 is gradually close to the first limit column c1, and in the case that the display apparatus is in the flattened state, the first limit column c1 is abutted against the first end of the third arc-shaped chute c2, so as to achieve the limiting in the flattened state. In the process of the display apparatus switching from the unfolded state to the folded state, the second end of the third arc-shaped chute c2 is gradually close to the first limit column c1, and in the case that the display apparatus is folded to a target angle, the first limit column c1 is abutted against the second end of the third arc-shaped chute c2, so as to avoid excessive rotation. It should be noted that, for the principle of limiting the rotation of the second support portion 202 relative to the first support portion 201 by the second limit column c3 and the fourth arc-shaped chute c4, reference may be made to the above principle of limiting the rotation of the first support portion 201 and the body support assembly 100. Details are not repeated herein again.

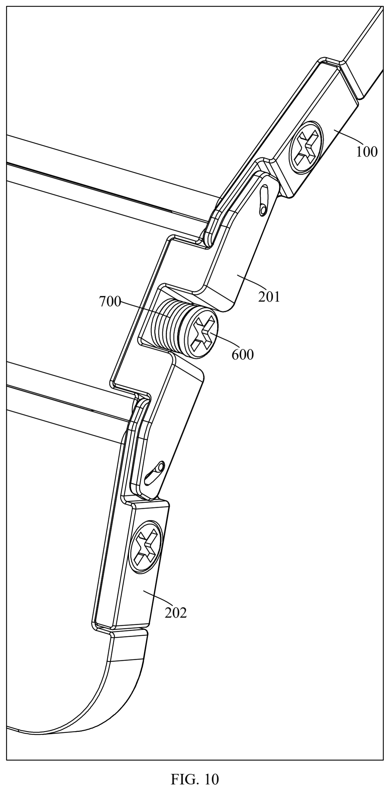

In some embodiments, referring to FIG. 8 and FIG. 10, FIG. 10 is a schematic assembly diagram of the display apparatus shown in FIG. 8. The body support assembly 100 in the display apparatus includes a support base 101 and a first connection plate 102 fixedly connected to a side surface of the support base 101. The first limit column c1 is fixedly connected to a side, facing away from the support base 101, of the first connection plate 102. The first support portion 201 in the rotatable support assembly 200 includes: a first support portion body 2011, and a second connection plate 2012 fixedly connected to a side surface of the first support portion body 2011. The third arc-shaped chute c2 and the fourth arc-shaped chute c4 are disposed at two opposite ends of the second connection plate 2012 in the first direction f1, respectively. The second support portion 202 in the rotatable support assembly 100 includes: a second support portion body 2021 and a third connection plate 2022 fixedly connected to a side surface of the second support portion body 2021, and the second limit column c3 is fixedly connected to a side, facing away from the second support portion body 2021, of the third connection plate 2022. A side, close to the first support portion body 2011, of the support base 101 is provided with the third slide member 100a, a side, close to the support base 101, of the first support portion body 2011 is provided with the first slide member 201a, a side, close to the second support portion body 2021, of the first support portion body 2011 is provided with the second slide member 201b, and a side, close to the first support portion body 2011, of the second support portion body 2021 is provided with the fourth slide member 202a. In this way, the first connection plate 102 can shield the side surface of the first arc-shaped chute A2 on the support base 101, so as to limit the first arc-shaped slide plate A1 on the first support portion body 2011 in the first arc-shaped chute A2; and the third connection plate 2022 can shield the side surface of the second arc-shaped chute A4 on the second support portion body 2021, so as to limit the second arc-shaped slide plate A3 on the first support portion body 2011 in the second arc-shaped chute A4.

Exemplarily, as shown in FIG. 8, the side surface of the support base 101 is provided with a screw hole d1 and two positioning holes d2 disposed on two sides of the screw hole d1. A side, facing towards the support base 101, of the first connection plate 102 is provided with two positioning columns d3 in one-to-one correspondence to the two positioning holes d2, and a through hole d4 corresponding to the screw hole d1. At least a part of the positioning column d3 can be disposed in the corresponding positioning hole d2. In this way, the screw d5 is threadedly connected to the screw hole d1 on the side surface of the support base 101 upon passing through the through hole d4 on the first connection plate 102, and the assembly precision of the first connection plate 102 and the support base 101 is improved through the cooperation of the positioning columns d3 and the positioning holes d2. For example, one of the two positioning holes d2 is a waist-shaped hole, which increases the convenience of assembly of the first connection plate 102 and the support base 101. The side surface of the second support portion body 2021 is provided with a screw hole d6 and two positioning holes d7 on two sides of the screw hole d6. A side, facing towards the second support portion body 2021, of the third connection plate 2022 is provided with two positioning columns d8 in one-to-one correspondence to the two positioning holes d7, and a through hole d9 corresponding to the screw hole d6. At least a part of the positioning column d8 can be disposed in the corresponding positioning hole d7. In this way, the screw d10 is threadedly connected to the screw hole d6 on the side surface of the second support portion body 2021 upon passing through the through hole d9 on the third connection plate 2022, and the assembly precision of the third connection plate 2022 and the second support portion body 2021 is improved by the cooperation of the positioning columns d8 and the positioning holes d7.

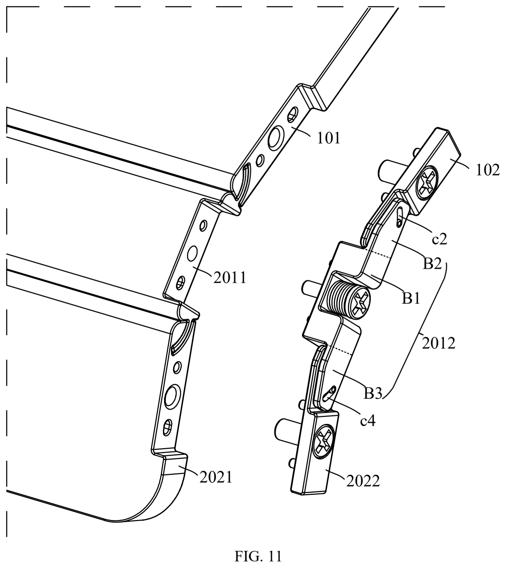

In the embodiments of the present disclosure, referring to FIG. 8 and FIG. 11, FIG. 11 is a schematic partial structural diagram of still another display apparatus according to some embodiments of the present disclosure. The second connection plate 2012 in the first support portion 201 includes an intermediate connection plate B1, and a first edge connection plate B2 and a second edge connection plate B3 fixedly connected to two opposite sides of the intermediate connection plate B1, respectively. The intermediate connection plate B1 is arranged oppositely to the first support portion body 2011, and is connected to the first support portion body 2011. The first edge connection plate B2 is disposed on a side, facing away from the support base 101, of the first connection plate 102, and the second edge connection plate B3 is disposed on a side, facing away from the second support portion body 2021, of the third connection plate 2022. The third arc-shaped chute c2 is disposed on the first edge connection plate B2, and the fourth arc-shaped chute c4 is disposed on the second edge connection plate B3.

In practice, in the process of the display apparatus switching between the unfolded state and the folded state, in order to provide the display apparatus with a certain damping effect or self-hovering capability, the display apparatus further includes: a first torsion assembly 400 connected to a side, facing away from the support base 101, of the first connection plate 102 and a side, facing towards the body support assembly 100, of the first edge connection plate B2, respectively. The first torsion assembly 400 is configured to provide a damping force in the case that the first support portion 201 rotates relative to the body support assembly 100; and/or, a second torsion assembly 500 connected to a side, facing away from the second support portion body 2021, of the third connection plate 2022 and a side, facing towards the second support portion 202, of the second edge connection plate B3, respectively, wherein the second torsion assembly 500 is configured to provide a damping force in the case that the second support portion 202 rotates relative to the first support portion 201.

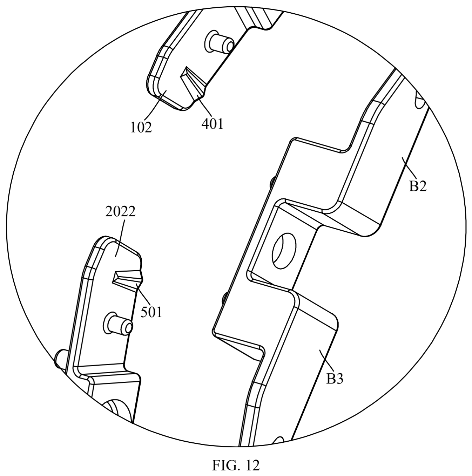

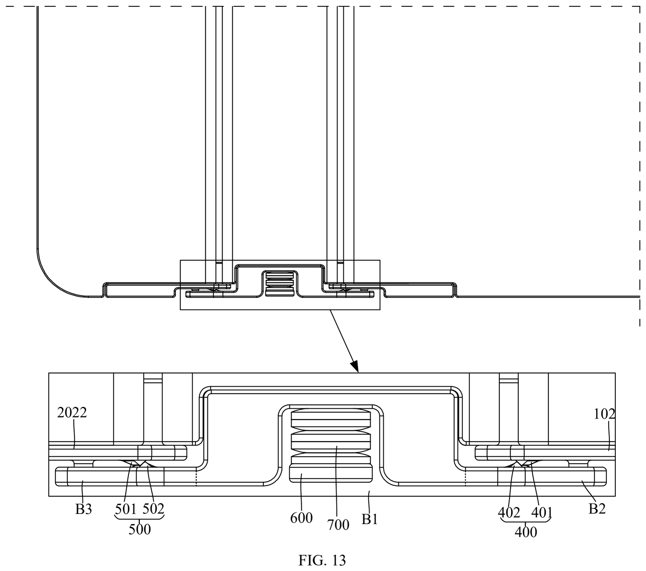

In the embodiments of the present disclosure, referring to FIG. 12 and FIG. 13, FIG. 12 is a schematic partial structural diagram of yet still another display apparatus according to some embodiments of the present disclosure, and FIG. 13 is a top view of a partial structure of a display apparatus according to some embodiments of the present disclosure. The first torsion assembly 400 includes: a first torsion protrusion 401 fixedly connected to a side, facing away from the support base 101, of the first connection plate 102 and at least one second torsion protrusion 402 fixedly connected to a side, facing towards the body support assembly 100, of the first edge connection plate B2. In the process of the display apparatus switching between the unfolded state and the folded state, one second torsion protrusion 402 of the at least one second torsion protrusion 402 is always abutted against the first torsion protrusion 401, and the first torsion protrusion 401 is movable relative to the second torsion protrusion 402 in the first direction f1.

And/or, the second torsion assembly 500 includes a third torsion protrusion 501 fixedly connected to a side, facing away from the second support portion body 2021, of the third connection plate 2022, and at least one fourth torsion protrusion 502 fixedly connected to a side, facing towards the second support portion 202, of the second edge connection plate B3. In the process of the display apparatus switching between the unfolded state and the folded state, one fourth torsion protrusion 502 of the at least one fourth torsion protrusion 502 is always abutted against the third torsion protrusion 501, and the third torsion protrusion 501 is movable relative to the fourth torsion protrusion 502 in the first direction f1.

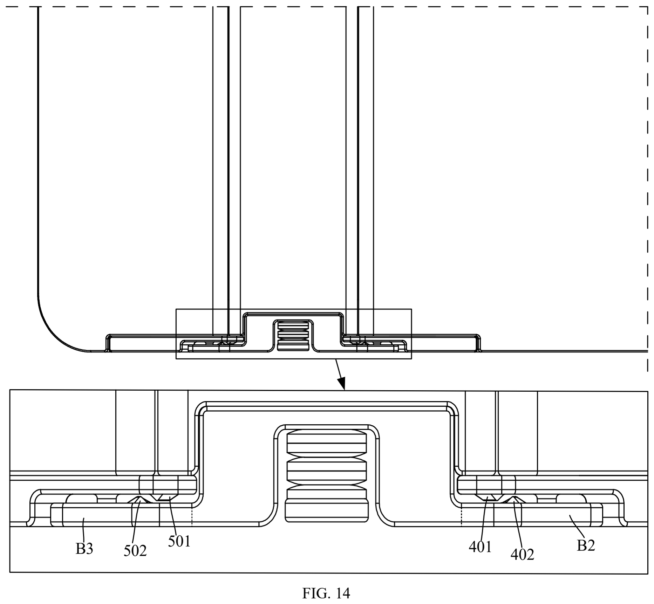

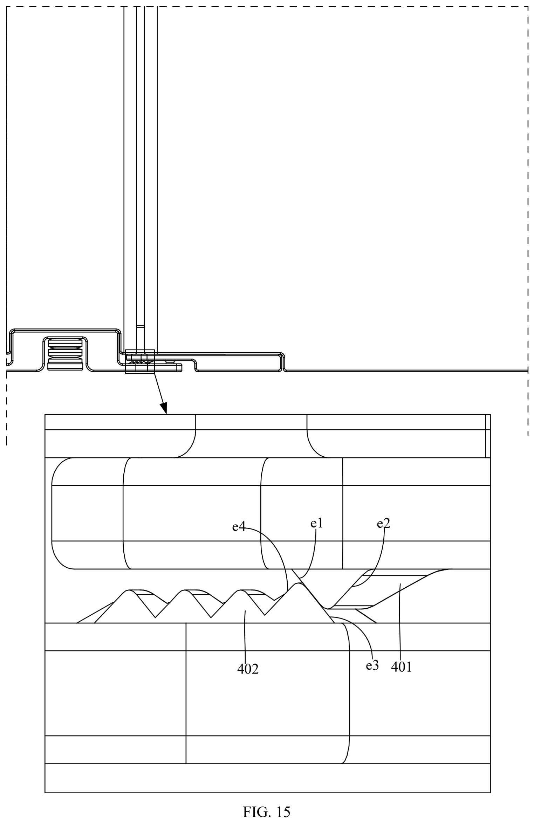

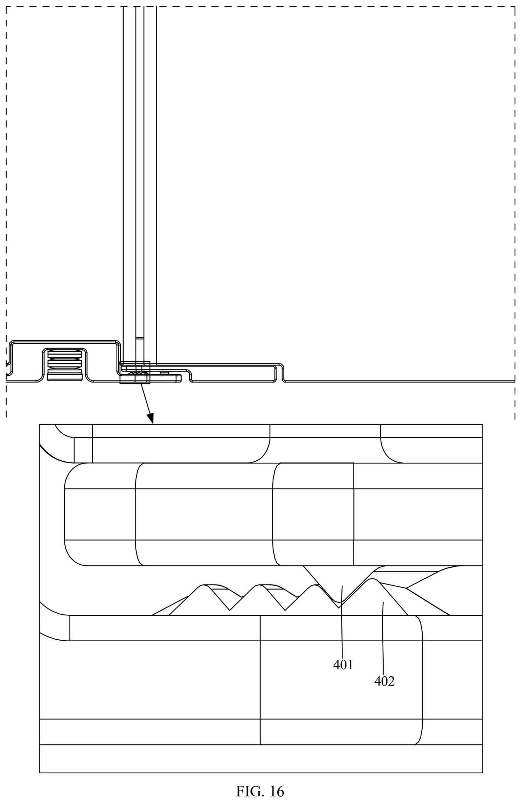

Exemplarily, the process of the first support portion 201 rotating relative to the body support assembly 100 is used as an example for schematic illustration: in the case that the display apparatus is in the flattened state, as shown in FIG. 13, the first torsion protrusion 401 is abutted against the second torsion protrusion 402 closest to the first torsion protrusion 401 among the at least one second torsion protrusion 402. In this case, the display apparatus can be stably maintained in the flattened state by an interaction force between the first torsion protrusion 401 and the second torsion protrusion 402. In the case that the display apparatus needs to be folded, an external force is applied to the first support portion 201, such that the first torsion protrusion 401 and the second torsion protrusion 402 are rotated against the interaction force by the external force. It should be noted that, referring to FIG. 14, FIG. 14 is a schematic diagram of a separation effect of a first torsion protrusion and a second torsion protrusion according to some embodiments of the present disclosure. In the case that one second torsion protrusion 402 is provided, after the first support portion 201 is rotated at a certain angle relative to the body support assembly 100, the first torsion protrusion 401 is separated from the second torsion protrusion 402. In this case, the first support portion 201 and the body support assembly 100 are in a free rotation state. Referring to FIG. 15 and FIG. 16, FIG. 15 is a schematic diagram of connection between a first torsion protrusion and a plurality of second torsion protrusions in the case that the display apparatus is in a flattened state according to some embodiments of the present disclosure, and FIG. 16 is a schematic diagram of connection between a first torsion protrusion and a plurality of second torsion protrusions in the case that the display apparatus is in a folded state according to some embodiments of the present disclosure. In the case that a plurality of second torsion protrusions 402 are provided, the first torsion protrusion 401 is abutted against the second torsion protrusions 402 in sequence, to hover at different angles. It should be noted that, for the principle of achieving damping between the second support portion 202 and the first support portion 201 through the cooperation between the third torsion protrusion 501 and the fourth torsion protrusion 502, reference may be made to the above description of the first torsion protrusion and the second torsion protrusion. Details are not repeated herein again.

In some embodiments, as shown in FIG. 15, the first torsion protrusion 401 in the first torsion assembly 400 is provided with a first slope e1 and a second slope e2 opposite to each other in the first direction f1, and the second torsion protrusion 402 is provided with a third slope e3 and a fourth slope e4 opposite to each other in the first direction f1. In the process of the display apparatus switching between the unfolded state and the folded state, the first torsion protrusion 401 first is abutted against the second torsion protrusion 402 by attaching the first slope e1 with the third slope e3, and then is abutted against the second torsion protrusion 402 by attaching the second slope e2 with the fourth slope e4. And/or, the third torsion protrusion 501 in the second torsion assembly 500 includes a fifth slope and a sixth slope (not shown in the drawings, and can be seen with reference to FIG. 13 and FIG. 15) opposite to each other in the first direction f1, and the fourth torsion protrusion 502 is provided with a seventh slope and an eighth slope opposite to each other in the first direction f1. In the process of the display apparatus switching between the unfolded state and the folded state, the third torsion protrusion 501 first is abutted against the fourth torsion protrusion 502 by attaching the fifth slope with the seventh slope, and then is abutted against the fourth torsion protrusion 502 by attaching the sixth slope with the eighth slope e8.

The first support portion 201 rotating relative to the body support assembly 100 is used as an example for schematic illustration: as shown in FIG. 15, in the case that the display apparatus is in a flattened state, the first slope e1 in the first torsion protrusion 401 fits with the third slope e3 in the second torsion protrusion 402; in a bending process of the display apparatus, as shown in FIG. 16, in a process of applying an external force to the first support portion 201, the third slope e3 in the second torsion protrusion 402 gradually slides along the first slope e1; and after the top of the second torsion protrusion 402 is in contact with the top of the first torsion protrusion 401, in a further bending process, the fourth slope e4 on the second torsion protrusion 402 is abutted against the second slope e2 on the first torsion protrusion 401, and the fourth slope e4 gradually slides along the second slope e2. It should be noted that, for the principle of achieving damping between the second support portion 202 and the first support portion 201 through the cooperation between the third torsion protrusion 501 and the fourth torsion protrusion 502, reference may be made to the above description of the first torsion protrusion and the second torsion protrusion. Details are not repeated herein again.

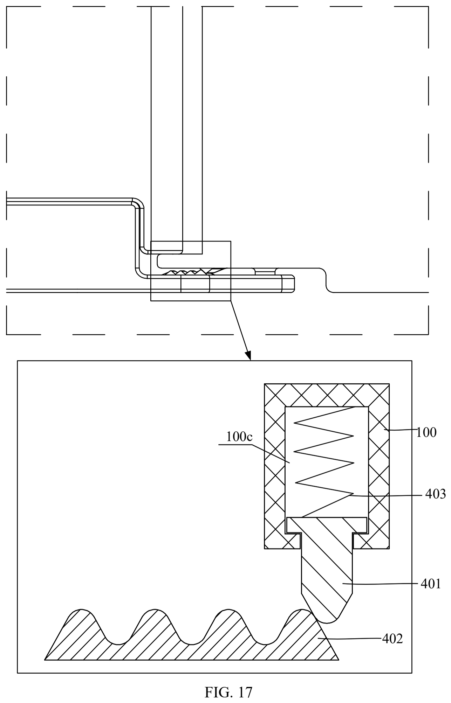

In other possible implementations, referring to FIG. 17, FIG. 17 is a top view of a partial structure of another display apparatus according to some embodiments of the present disclosure. a first mounting groove 100c is arranged in a side, facing away from the flexible display panel 300, of the body support assembly 100, and the first torsion assembly 400 further includes: a first elastic element 403 in the first mounting groove 100c, wherein a part of the first torsion protrusion 401 is disposed in the first mounting groove 100c, another part extends out of the first mounting groove 100c, one end of the first elastic element 403 is fixedly connected to a bottom surface of the first mounting groove 100c, and another end of the first elastic element 100c is fixedly connected to the part of the first torsion protrusion 401 in the first mounting groove 100c. It should be noted that, for the form of the first torsion protrusion and the second torsion protrusion shown in FIG. 17, reference may be made to that shown in FIG. 15.

And/or, a second mounting groove (not shown in the figure, and reference may be made to the structure of the first mounting groove in FIG. 17)is arranged in a side, facing away from the flexible display panel 300, of the second support portion 202, and the second torsion assembly 500 further includes a second elastic element disposed in the second mounting groove, wherein a part of the third torsion protrusion 501 is disposed in the second mounting groove, and another part extends out of the second mounting groove. One end of the second elastic element is fixedly connected to a bottom surface of the second mounting groove, and another end of the second elastic element 503 is fixedly connected to a part of the third torsion protrusion 501 in the second mounting groove.

Exemplarily, damping of the first support portion 201 and the body support assembly 100 during rotation being achieved through the cooperation of the first elastic element 403, the first torsion protrusion 401, and the second torsion protrusion 402 on a side, facing away from the flexible display panel 300, of the body support assembly 100 is used as an example for schematic illustration: in the case that the display apparatus is in a flattened state, the first torsion protrusion 401 is abutted against the second torsion protrusion 402 closest to the first torsion protrusion 401 among the at least one second torsion protrusion 402. In this case, the first elastic element 403 can be compressed by an interaction force between the first torsion protrusion 401 and the second torsion protrusion 402, and then, under a reaction force generated by the first elastic element 403, a support force is further provided for the first torsion protrusion 401 and the second torsion protrusion 402, such that the display apparatus can be stably maintained in the flattened state. In the case that the display apparatus needs to be folded, an external force is applied to the first support portion 201, such that the first torsion protrusion 401 and the second torsion protrusion 402 are rotated against the interaction force by the external force. It should be noted that in the case that one second torsion protrusion 402 is provided, after the first support portion 201 is rotated at a certain angle relative to the body support assembly 100, the first torsion protrusion 401 is separated from the second torsion protrusion 402. In this case, the first support portion 201 and the body support assembly 100 are in a free rotation state. In the case that a plurality of second torsion protrusions 402 are provided, the first torsion protrusion 401 is abutted against the second torsion protrusions 402 in sequence, and the first elastic element 403 is compressed and released in sequence in the process, such that damping at different angles can be achieved. It should be noted that, for the principle of achieving damping between the second support portion 202 and the first support portion 201 through the second elastic element 503, the third torsion protrusion 501, and the fourth torsion protrusion 502, reference may be made to the above description of the first elastic element 403, the first torsion protrusion 401, and the second torsion protrusion 402. Details are not repeated herein again.

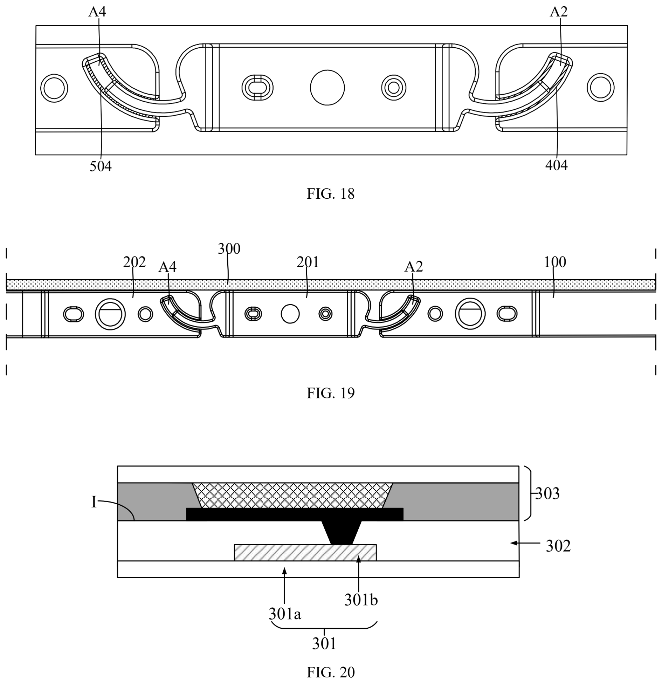

In the embodiments of the present disclosure, referring to FIG. 18, FIG. 18 is a schematic partial structural diagram of a display apparatus according to another embodiment of the present disclosure. The first torsion assembly 400 further includes: first foam 404 fixed to an inner side wall of the first arc-shaped chute A2; and/or, the second torsion assembly 500 further includes: second foam 504 fixed to an inner side wall of the second arc-shaped chute A4. In this case, with the foam disposed in the arc-shaped chute, a damping effect is further provided for the relative rotation between the first support portion 201 and the body support assembly 100 and the relative rotation between the second support portion 202 and the first support portion 201 by a frictional force between the arc-shaped slide plate and the foam. It should be noted that, the damping effect between the first support portion and the body support assembly can be achieved by providing only one second torsion protrusion and combining the first foam. The damping effect between the second support portion and the first support portion can also be achieved by providing only one fourth torsion protrusion and combining the second foam.

In some embodiments, as shown in FIG. 8, FIG. 10, and FIG. 13, the display apparatus further includes: a fixing rod 600 and a third elastic element 700. A first end of the fixing rod 600 is fixedly connected to a side surface of the first support portion body 2011, the intermediate connection plate B1 in the second connection plate 2012 is sleeved on the fixing rod 600 and is slidably connected to the fixing rod 600, and the third elastic element 700 is disposed between the intermediate connection plate B1 and a second end of the fixing rod 600. In this case, the third elastic element 700 is disposed between the middle connection plate B1 and the second end of the fixing rod 600 by sleeving the fixing rod 600 with the middle connection plate B1 in the second connection plate 2012. In this way, during a stroke of movement of the second torsion protrusion 402 relative to the first torsion protrusion 401, the second connection plate 2012 moves in a direction facing away from the first support portion body 2011 to compress the third elastic element 700. The third elastic element 700 provides a reaction force to the second connection plate 2012, such that a support force between the second torsion protrusion 402 and the first torsion protrusion 401 is further increased, and a better damping effect between the first support portion 201 and the body support assembly 100 is ensured. Meanwhile, a support force between the third torsion protrusion 501 and the fourth torsion protrusion 502 can be further increased, and a better damping effect between the second support portion 202 and the first support portion 201 is ensured. It should be noted that, in the case that the display apparatus is in the unfolded state, the third elastic element has a certain amount of compression, such that certain damping can be provided for the rotatable support assembly. In the present disclosure, the third elastic element may be a coil spring, a disc spring, or the like.

Exemplarily, as shown in FIG. 8, the side surface of the first support portion body 2011 is provided with a screw hole g1 and two positioning holes g2 disposed on two sides of the screw hole g1. A side, facing towards the second support portion body 2011, of the second connection plate 2012 is provided with two positioning columns g3 in one-to-one correspondence to the two positioning holes g2, and a through hole g4 corresponding to the screw hole g1. At least a part of the positioning column g3 can be disposed in the corresponding positioning hole g2. The fixing rod 600 is threadedly connected to the screw hole g1 on the side surface of the first support portion body 2011 through the through hole g4.

In some embodiments of the present disclosure, referring to FIG. 19 and FIG. 20, FIG. 19 is a schematic side view of a display apparatus with a flexible display panel unfolded according to some embodiments of the present disclosure, and FIG. 20 is a schematic structural diagram of film layers of a flexible display panel according to some embodiments of the present disclosure. The flexible display panel 300 in the display apparatus includes a driver backplane 301, a planarization layer 302 disposed on a side of the driver backplane 301, and a plurality of light-emitting devices 303 disposed on a side, facing away from the driver backplane 301, of the planarization layer 302. The plurality of light-emitting devices 303 are all electrically connected to the driver backplane 301. A rotation axis (the rotation axis passes through a virtual center of the first arc-shaped chute) of the first support portion 201 under the condition of rotating relative to the body support assembly 100 is disposed in a surface I, facing away from the driver backplane 301, of the planarization layer 302; and a rotation axis (the rotation axis passes through a virtual center of the second arc-shaped chute) of the second support portion 202 under the condition of rotating relative to the first support portion 201 is disposed in the surface I, facing away from the driver backplane 301, of the planarization layer 302. In this case, the rotation axis of the first support portion 201 under the condition of rotating relative to the body support assembly 100 is disposed in the surface, facing away from the driver backplane 301, of the planarization layer 302, and the rotation axis of the second support portion 202 under the condition of rotating relative to the first support portion 201 is disposed in the surface, facing away from the driver backplane 301, of the planarization layer 302. In this way, in the process of the display apparatus switching between the unfolded state and folded state, the amount of misalignment caused by inner and outer diameters of the flexible display panel 300 and the rotatable support assembly 200 during rotation is effectively avoided, such that tensile/compressive stresses on the flexible display panel 300 are avoided, and a better display effect of the flexible display panel 300 is ensured. In the present disclosure, the driver backplane 301 includes: a flexible substrate 301a, and a plurality of drive circuits 301b disposed on a side, close to the planarization layer 302, of the flexible substrate 301a, and the drive circuits 301b are configured to drive the light-emitting devices 303 to operate.

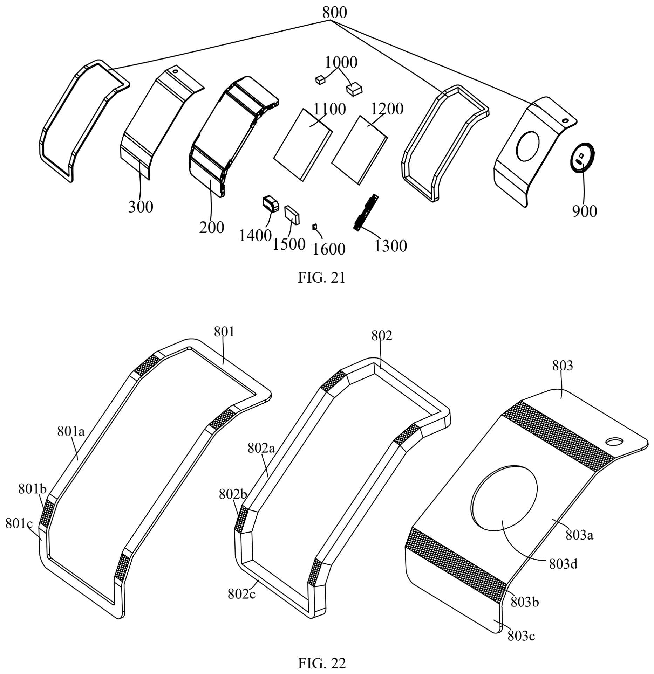

In some embodiments, referring to FIG. 21 and FIG. 22, FIG. 21 is a schematic exploded view of a display apparatus according to some embodiments of the present disclosure, and FIG. 22 is a schematic exploded view of the housing in FIG. 21. The display apparatus further includes a housing 800. The housing 800 includes a first rigid housing connected to the body support assembly 100, a flexible housing connected to the first support portion 201, and a second rigid housing connected to the second support portion 202. The flexible housing is disposed between the first rigid housing and the second rigid housing, and the flexible housing is connected to the first rigid housing and the second rigid housing, respectively. In this case, with the housing 800 in the display apparatus configured as the first rigid housing, the flexible housing, and the second rigid housing connected to each other, in the process of the display apparatus switching between the unfolded state and the folded state, the housing 800 can better adapt to the unfolding and folding of the display apparatus.

In the embodiments of the present disclosure, as shown in FIG. 22, the housing 800 in the display apparatus includes a cladding member 801, a middle bezel 802, and a bottom plate 803 arranged in a direction perpendicular to a display surface of the flexible display panel 300. The middle bezel 802 is fixedly connected to the body support assembly 100 and the two rotatable support assemblies 200, and the bottom plate 803 is connected to a side, facing away from the flexible display panel 300, of the middle bezel 802. The cladding member 801 is disposed on a side, facing away from the middle bezel 802, of the flexible display panel 300, and the cladding member 801 covers a non-display region of the flexible display panel 300. Exemplarily, the cladding member 801 includes a first rigid frame 801a corresponding to the body support assembly 100, a first flexible frame 801b corresponding to the first support portion 201, and a second rigid frame 801c corresponding to the second support portion 202. The cladding member 801 is in a snap-fit connection with the middle bezel 802. The middle bezel 802 includes a third rigid frame 802a corresponding to the body support assembly 100, a second flexible frame 802b corresponding to the first support portion 201, and a fourth rigid frame 802c corresponding to the second support portion 202. The bottom plate 803 includes a first rigid plate 803a corresponding to the body support assembly 100, a flexible plate 803b corresponding to the first support portion 201, and a second rigid plate 803c corresponding to the second support portion 202. The first rigid frame 801a, the third rigid frame 802a, and the first rigid plate 803a constitute the first rigid housing; the first flexible frame 801b, the second flexible frame 802b, and the flexible plate 803b constitute the flexible housing; and the second rigid frame 801c, the fourth rigid frame 802c, and the second rigid plate 803c constitute the second rigid housing. Exemplarily, the first rigid frame, the second rigid frame, the third rigid frame, the fourth rigid frame, the first rigid plate, and the second rigid plate are structures made of metal or hard plastic. The first flexible frame, the second flexible frame, and the flexible plate are structures made of flexible polymers or amorphous materials such as silica gel. The rigid housing and the flexible housing may be combined using injection molding or 3D printing.

In some embodiments, as shown in FIG. 21 and FIG. 22, an opening hole 803d is arranged in a side, facing away from the flexible display panel 300, of the bottom plate 803 in the housing 800. The display apparatus further includes a physical sign detection module 900 disposed in the housing 800. At least a part of the physical sign detection module 900 is exposed through the opening hole 803d of the bottom plate 803. In this case, after the display apparatus is integrated into the wearable device, features, such as heart rate and body fat rate, of the human body are detected through the physical sign detection module. In the present disclosure, as shown in FIG. 21, the display apparatus further includes a plurality of functional modules in the housing 800. The plurality of functional modules includes a camera 1000, a battery 1100, a mainboard 1200, a button module 1300, a SIM-equipped card holder, a loudspeaker 1400, a motor 1500, a microphone 1600, and the like.

In summary, the embodiments of the present disclosure provide a display apparatus including a body support assembly, two rotatable support assemblies, and a flexible display panel. By arranging the body support assembly and the two rotatable support assemblies disposed on two sides of the body support assembly in the first direction in the display apparatus, in the case that the display apparatus switches between the unfolded state and the folded state, the rotatable support assemblies on two sides of the body support assembly are rotatable relatively in different directions under the action of external force. In this case, the flexible display panel in the display apparatus is foldable in a second direction (the second direction is perpendicular to the first direction) under the drive of the rotatable support assemblies. In addition, in the process of the display apparatus switching between the unfolded state and the folded state, the first support portion of one rotatable support assembly is rotatable at a certain angle relative to the body support assembly, and the second support portion is also rotatable at a certain angle relative to the first support portion. In this case, the flexible display panel can be folded into different patterns under the drive of the first support portion and the second support portion. In this way, the display apparatus provided with the flexible display panel in the present disclosure supports various different folding patterns, which improves the flexibility in the use of the display apparatus, and improves user experience.

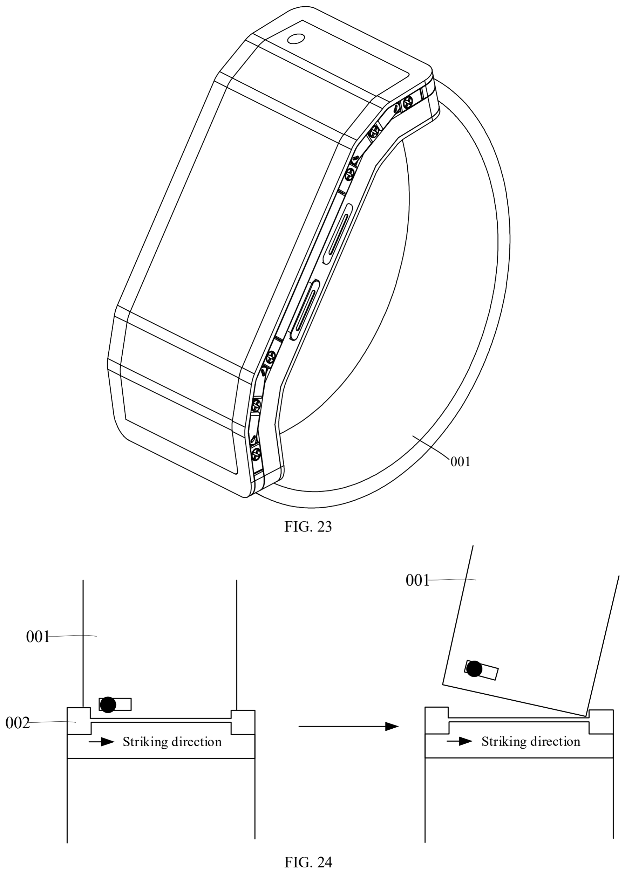

The embodiments of the present disclosure further provide a wearable device. Referring to FIG. 23, FIG. 23 is a schematic structural diagram of a wearable device according to some embodiments of the present disclosure. The wearable device includes a display apparatus, and a watchband 001 detachably connected to the display apparatus. The display apparatus is the display apparatus according to any one of the above. Exemplarily, in the case that the display apparatus is a device body in a wearable device, the wearable device is a watch or a wristband. For example, in the case that the display apparatus is a smartphone, the display apparatus is bent and then connected to a watchband, and can be worn on the wrist of a user to be used as a watch. After the display apparatus is unfolded, the watchband is detached from the display apparatus, and is used as a mobile phone.

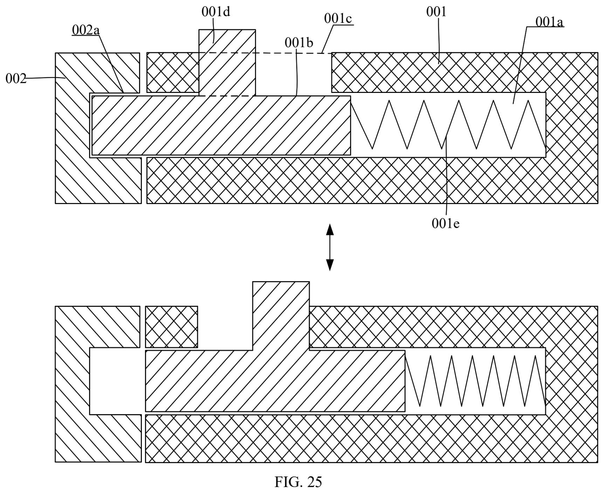

In the embodiments of the present disclosure, referring to FIG. 24 and FIG. 25, FIG. 24 is a schematic partial structural diagram of a wearable device according to some embodiments of the present disclosure, and FIG. 25 is a schematic diagram of connection between the watchband in FIG. 24 and the display apparatus. The wearable device further includes a mounting ear 002 fixed in the display apparatus, wherein the mounting ear 002 is provided with two opposite mounting holes 002a; and the watchband 001 is provided with two opposite pin holes 001a, two pins 001b, a lever hole 001c, a lever assembly 001d, and a fourth elastic element 001e. The fourth elastic element 001e is disposed in one of the pin holes 001a, one end of the fourth elastic element 001e is connected to the bottom of the pin hole 001a, and another end is connected to a part of the pin 001b in the pin hole 001a. One end of each of the two pins 001b extends out of an opening of the corresponding pin hole 001a to match with the mounting hole 002a, and the lever hole 001c is in communication with one of the pin holes 001a. The lever assembly 001d is connected to one pin 001b, a part of the lever assembly 001d extends out of the lever hole 001c, and the lever assembly 001d is configured to drive the pin 001b connected thereto to move, to be detachably connected to the corresponding mounting hole 002a.

It should be noted that, in the accompanying drawings, the dimensions of the layers and regions may be exaggerated for clarity of illustration. Moreover, it should be understood that, in the case that an element or layer is referred to as being "on" another element or layer, it may be directly on the other element, or an intermediate layer may be present. In addition, it should be understood that, in the case that an element or layer is referred to as being "under" another element or layer, it may be directly under the other element, or one or more intermediate layers or elements may be present. In addition, it can also be understood that, in a case that a layer or element is referred to as being "between" two layers or elements, it may be the only layer between the two layers or elements, or one or more intermediate layers or elements may also be present. Like reference numerals refer to like elements throughout the present disclosure.

In the present disclosure, the terms "first" and "second" are merely used for descriptive purposes and should not be construed as indicating or implying the relative importance. The term "a plurality of" refers to two or more, unless otherwise explicitly defined.

Described above are merely optional embodiments of the present disclosure, and are not intended to limit the present disclosure. Within the spirit and principles of the present disclosure, any modifications, equivalent substitutions, improvements, and the like should fall within the scope of protection of the present disclosure.

## Claims

1. A display apparatus, comprising:
a body support assembly;
two rotatable support assemblies disposed on two sides of the body support assembly in a first direction, wherein each of the two rotatable support assemblies comprises a first support portion and a second support portion, wherein the first support portion is disposed between the body support assembly and the second support portion in the first direction, and the first support portion is rotatably connected to the second support portion and the body support assembly; and
a flexible display panel, wherein a rear surface of the flexible display panel is connected to the body support assembly and the rotatable support assemblies,
wherein in a process of the display apparatus switching between an unfolded state and a folded state, an angle of the first support portion rotating relative to the body support assembly and an angle of he second support portion rotating relative to the first support portion are both acute angles.

2. The display apparatus according to claim 1, wherein a first slide member and a second slide member are arranged on the first support portion at two opposite sides of the first direction, a third slide member rotatably connected to the first slide member is arranged on a side, facing towards the first support portion, of the body support assembly, and a fourth slide member rotatably connected to the second slide member is arranged on a side, facing towards the first support portion, of the second support portion.

3. The display apparatus according to claim 2, wherein one of the first slide member and the third slide member is a first arc-shaped slide plate, and the other of the first slide member and the third slide member is a first arc-shaped chute; and one of the second slide member and the fourth slide member is a second arc-shaped slide plate, and the other of the second slide member and the fourth slide member is a second arc-shaped chute,
wherein at least a part of the first arc-shaped slide plate is disposed in the first arc-shaped chute, and at least a part of the second arc-shaped slide plate is disposed in the second arc-shaped chute.

4. The display apparatus according to claim 3, wherein a chute opening allowing a corresponding arc-shaped slide plate to slide into and a limit blind end opposite to the chute opening are arranged in each of the first arc-shaped chute and the second arc-shaped chute,
wherein in a case that the display apparatus is in the folded state, an end portion of the first arc-shaped slide plate is abutted against a limit blind end of the first arc-shaped chute, and/or an end portion of the second arc-shaped slide plate is abutted against a limit blind end of the second arc-shaped chute.

5. The display apparatus according to claim 3, wherein a first rotation limit member and a second rotation limit member are arranged on the first support portion at two opposite sides of the first direction, a third rotation limit member matched with the first rotation limit member is arranged on a side, facing towards the first support portion, of the body support assembly, and a fourth rotation limit member matched with the second rotation limit member is arranged on a side, facing towards the first support portion, of the second support portion,
wherein in a case that the display apparatus is in the unfolded state, the first rotation limit member is abutted against the third rotation limit member, and/or the second rotation limit member is abutted against the fourth rotation limit member.

6. The display apparatus according to claim 5, wherein in a case that the first slide member is the first arc-shaped slide plate and the third slide member is the first arc-shaped chute, the first rotation limit member comprises a first limit protrusion fixedly connected to an end portion of the first arc-shaped slide plate, and the third rotation limit member comprises a second limit protrusion fixed to an inner wall of the first arc-shaped chute;
and/or, in a case that the second slide member is the second arc-shaped slide plate and the fourth slide member is the second arc-shaped chute, the second rotation limit member comprises a third limit protrusion fixedly connected to an end portion of the second arc-shaped slide plate, and the fourth rotation limit member comprises a fourth limit protrusion fixed to an inner wall of the second arc-shaped chute.

7. The display apparatus according to claim 5, wherein one of the first rotation limit member and the third rotation limit member is a first limit column, the other of the first rotation limit member and the third rotation limit member is a third arc-shaped chute, and at least a part of the first limit column is disposed in the third arc-shaped chute;
and/or, one of the second rotation limit member and the fourth rotation limit member is a second limit column, the other of the second rotation limit member and the fourth rotation limit member is a fourth arc-shaped chute, and at least a part of the second limit column is disposed in the fourth arc-shaped chute,
wherein in a case that the display apparatus is in the unfolded state, the first limit column is abutted against a first end of the third arc-shaped chute, and/or the second limit column is abutted against a first end of the fourth arc-shaped chute; and in a case that the display apparatus is in the folded state, the first limit column is abutted against a second end of the third arc-shaped chute, and/or the second limit column is abutted against a second end of the fourth arc-shaped chute.

8. The display apparatus according to claim 7, wherein the body support assembly comprises a support base and a first connection plate fixedly connected to a side surface of the support base, wherein the first limit column is fixedly connected to a side, facing away from the support base, of the first connection plate;
the first support portion comprises a first support portion body and a second connection plate connected to a side surface of the first support portion body, wherein the third arc-shaped chute and the fourth arc-shaped chute are disposed on two opposite sides of the second connection plate in the first direction; and
the second support portion comprises a second support portion body and a third connection plate connected to a side surface of the second support portion body, wherein the second limit column is fixedly connected to a side, facing away from the second support portion body, of the third connection plate,
wherein a side, close to the first support portion body, of the support base is provided with the third slide member; a side of, close to the support base, the first support portion body is provided with the first slide member; a side, close to the second support portion body, of the first support portion body is provided with the second slide member; and a side, close to the first support portion body, of the second support portion body is provided with the fourth slide member.

9. The display apparatus according to claim 8, wherein the second connection plate comprises an intermediate connection plate, and a first edge connection plate and a second edge connection plate fixedly connected to two opposite sides of the intermediate connection plate, wherein the intermediate connection plate is arranged oppositely to the first support portion body and is connected to the first support portion body, the first edge connection plate is disposed on a side, facing away from the support base, of the first connection plate, and the second edge connection plate is disposed on a side, facing away from the second support portion body, of the third connection plate,
wherein the third arc-shaped chute is disposed on the first edge connection plate, and the fourth arc-shaped chute is disposed on the second edge connection plate.

10. The display apparatus according to claim 9, further comprising:
a first torsion assembly connected to a side, facing away from the support base, of the first connection plate and a side, facing towards the body support assembly, of the first edge connection plate, wherein the first torsion assembly is configured to provide a damping force in a case that the first support portion rotates relative to the body support assembly;
and/or, a second torsion assembly connected to a side, facing away from the second support portion body, of the third connection plate and a side, facing towards the second support portion, of the second edge connection plate, wherein the second torsion assembly is configured to provide a damping force in a case that the second support portion rotates relative to the first support portion.

11. The display apparatus according to claim 10, wherein the first torsion assembly comprises a first torsion protrusion fixedly connected to a side, facing away from the support base, of the first connection plate and at least one second torsion protrusion fixedly connected to a side, facing towards the body support assembly, of the first edge connection plate; and in the process of the display apparatus switching between the unfolded state and the folded state, one second torsion protrusion of the at least one second torsion protrusion is always abutted against the first torsion protrusion, and the first torsion protrusion is movable relative to the second torsion protrusion in the first direction;
and/or, the second torsion assembly comprises a third torsion protrusion fixedly connected to a side, facing away from the second support portion body, of the third connection plate, and at least one fourth torsion protrusion fixedly connected to a side, facing towards the second support portion, of the second edge connection plate; and in the process of the display apparatus switching between the unfolded state and the folded state, one fourth torsion protrusion of the at least one fourth torsion protrusion is always abutted against the third torsion protrusion, and the third torsion protrusion is movable relative to the fourth torsion protrusion in the first direction.

12. The display apparatus according to claim 11, wherein the first torsion protrusion is provided with a first slope and a second slope opposite to each other in the first direction, and the second torsion protrusion is provided with a third slope and a fourth slope opposite to each other in the first direction; and in the process of the display apparatus switching between the unfolded state and the folded state, the first torsion protrusion first is abutted against the second torsion protrusion by attaching the first slope with the third slope, and then is abutted against the second torsion protrusion by attaching the second slope with the fourth slope;
and/or, the third torsion protrusion is provided with a fifth slope and a sixth slope opposite to each other in the first direction, and the fourth torsion protrusion is provided with a seventh slope and an eighth slope opposite to each other in the first direction; and in the process of the display apparatus switching between the unfolded state and the folded state, the third torsion protrusion first is abutted against the fourth torsion protrusion by attaching the fifth slope with the seventh slope, and then is abutted against the fourth torsion protrusion by attaching the sixth slope with the eighth slope.

13. The display apparatus according to claim 11, wherein a first mounting groove is arranged in a side, facing away from the flexible display panel, of the body support assembly, and the first torsion assembly further comprises a first elastic element disposed in the first mounting groove, wherein a part of the first torsion protrusion is disposed in the first mounting groove, another part extends out of the first mounting groove, one end of the first elastic element is fixedly connected to a bottom surface of the first mounting groove, and another end of the first elastic element is fixedly connected to the part of the first torsion protrusion in the first mounting groove; and/or, a second mounting groove is arranged in a side, facing away from the flexible display panel, of the second support portion, and the second torsion assembly further comprises a second elastic element disposed in the second mounting groove, wherein a part of the third torsion protrusion is disposed in the second mounting groove, another part extends out of the second mounting groove, one end of the second elastic element is fixedly connected to a bottom surface of the second mounting groove, and another end of the second elastic element is fixedly connected to the part of the third torsion protrusion in the second mounting groove.

14. The display apparatus according to claim 10, wherein the first torsion assembly further comprises first foam fixed to an inner side wall of the first arc-shaped chute; and/or, the second torsion assembly further comprises second foam fixed to an inner side wall of the second arc-shaped chute.

15. The display apparatus according to any one of claims 9 to 14, further comprising a fixing rod and a third elastic element, wherein a first end of the fixing rod is fixedly connected to a side surface of the first support portion body, the intermediate connection plate is sleeved on the fixing rod and is slidably connected to the fixing rod, and the third elastic element is disposed between the intermediate connection plate and a second end of the fixing rod.

16. The display apparatus according to any one of claims 1 to 14, wherein the flexible display panel comprises a driver backplane, a planarization layer disposed on a side of the driver backplane, and a plurality of light-emitting devices disposed on a side, facing away from the driver backplane, of the planarization layer, wherein the plurality of light-emitting devices are all electrically connected to the driver backplane,
wherein a rotation axis of the first support portion under a condition of rotating relative to the body support assembly is disposed in a surface, facing away from the driver backplane, of the planarization layer, and a rotation axis of the second support portion under a condition of rotating relative to the first support portion is disposed in the surface, facing away from the driver backplane, of the planarization layer.

17. The display apparatus according to any one of claims 1 to 14, further comprising a housing, wherein the housing comprises a first rigid housing connected to the body support assembly, a flexible housing connected to the first support portion, and a second rigid housing connected to the second support portion,
wherein the flexible housing is disposed between the first rigid housing and the second rigid housing, and the flexible housing is connected to the first rigid housing and the second rigid housing.

18. The display apparatus according to claim 17, wherein the housing comprises a cladding member, a middle bezel, and a bottom plate disposed in a direction perpendicular to a display surface of the flexible display panel, wherein
the middle bezel is connected to the body support assembly and the two rotatable support assemblies, the bottom plate is connected to a side, facing away from the flexible display panel, of the middle bezel, the cladding member is disposed on a side, facing away from the middle bezel, of the flexible display panel, and the cladding member covers a non-display region of the flexible display panel.

19. The display apparatus according to claim 18, wherein an opening hole is arranged in a side, facing away from the flexible display panel, of the bottom plate, and the display apparatus further comprises a physical sign detection module disposed in the housing, wherein at least a part of the physical sign detection module is exposed through the opening hole.

20. A wearable device, comprising: a display apparatus and a watchband detachably connected to the display apparatus, wherein the display apparatus is the display apparatus as defined in any one of claims 1 to 19.
